(19) Europäisches Patentamt
European Patent Office
Office européen des brevets

(11) **EP 3 289 282 B1**

(12) **EUROPÄISCHE PATENTSCHRIFT**

(45) Veröffentlichungstag und Bekanntmachung des Hinweises auf die Patenterteilung:
**19.01.2022 Patentblatt 2022/03**

(21) Anmeldenummer: **16711510.4**

(22) Anmeldetag: **10.03.2016**

(51) Internationale Patentklassifikation (IPC):
***F21S 41/675*** (2018.01)

(52) Gemeinsame Patentklassifikation (CPC):
**B60Q 1/085; F21S 41/176; F21S 41/663; F21S 41/675**

(86) Internationale Anmeldenummer:
**PCT/AT2016/050055**

(87) Internationale Veröffentlichungsnummer:
**WO 2016/172747 (03.11.2016 Gazette 2016/44)**

(54) **VERFAHREN ZUM ANSTEUERN EINES LICHTSCANNERS IN EINEM SCHEINWERFER FÜR FAHRZEUGE**

METHOD FOR CONTROLLING A LIGHT SCANNER IN A HEADLAMP FOR VEHICLES

PROCÉDÉ DE COMMANDE D'UN DISPOSITIF DE BALAYAGE OPTIQUE DANS UN PROJECTEUR DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2015 AT 503392015**

(43) Veröffentlichungstag der Anmeldung:
**07.03.2018 Patentblatt 2018/10**

(73) Patentinhaber: **ZKW Group GmbH**
**3250 Wieselburg (AT)**

(72) Erfinder:
• **REISINGER, Bettina**
**3300 Amstetten (AT)**
• **MITTERLEHNER, Thomas**
**3240 Mank (AT)**

(74) Vertreter: **Patentanwaltskanzlei Matschnig & Forsthuber OG**
**Biberstraße 22**
**Postfach 36**
**1010 Wien (AT)**

(56) Entgegenhaltungen:
| | |
|---|---|
| **EP-A1- 2 690 352** | **WO-A1-2005/121866** |
| **WO-A1-2014/121314** | **DE-A1-102009 025 678** |
| **DE-A1-102012 205 437** | **DE-A1-102012 208 566** |
| **US-A1- 2007 171 497** | **US-A1- 2008 239 252** |

**Beschreibung**

Die Erfindung bezieht sich auf ein Verfahren zum Ansteuern eines Lichtscanners in einem Scheinwerfer für Fahrzeuge, wobei der Laserstrahl zumindest einer modulierten Laserlichtquelle mittels des Lichtscanners scannend auf ein Lichtkonversionsmittel gelenkt wird, um an diesem ein Leuchtbild zu erzeugen, welches über ein Abbildungssystem als Lichtbild auf die Fahrbahn projiziert wird, und ein Mikrospiegel des Lichtscanners entsprechend festgelegter Steuerkennlinien in zumindest einer Koordinatenrichtung verschwenkt wird.

Die Erfindung bezieht sich weiters auf einen Scheinwerfer für Fahrzeuge, mit zumindest einer modulierten Laserlichtquelle, deren Laserstrahl mittels eines Lichtscanners scannend auf ein Lichtkonversionsmittel lenkbar ist, um an diesem ein Leuchtbild zu erzeugen, welches über ein Abbildungssystem als Lichtbild auf die Fahrbahn projiziert wird, und ein Mikrospiegel des Lichtscanners entsprechend festgelegter Steuerkennlinien in zumindest einer Koordinatenrichtung verschwenkbar ist, sowie mit einer Laseransteuerung und einer dieser zugeordneten Recheneinheit.

Scheinwerfer, die mit über ein Lichtkonversionsmittel scannenden Laserstrahlen arbeiten, sind bekannt. Sie erzeugen üblicherweise ein Leuchtbild auf einem Lichtkonversionsmittel, oft kurz "Phosphor" genannt, auf welchem durch Fluoreszenz das z.B. blaue Laserlicht in im Wesentlichen "weißes" Licht umgewandelt wird. Das erzeugte Leuchtbild wird dann mit Hilfe des Abbildungssystems, z.B. einer Linsenoptik, auf die Fahrbahn projiziert. Der Lichtscanner oder das Strahlablenkmittel ist im Allgemeinen ein Mikrospiegel, der um eine oder um zwei Achsen bewegt werden kann, sodass z.B. ein zeilenweises Leuchtbild "geschrieben" wird. Die Modulation der Laserlichtquelle bestimmt für jeden Punkt oder jede Zeile des Leuchtbildes die gewünschte Leuchtdichte, die einerseits gesetzlichen Vorgaben für das projizierte Lichtbild entsprechen muss und andererseits der jeweiligen Fahrsituation angepasst werden kann

Die Verwendung des Lichtscanners mit einem oder mehreren Laserstrahlen, welche synchron zu der Spiegelschwingung moduliert werden, ermöglicht es, eine nahezu beliebige Lichtverteilung zu erzeugen. Bekannt ist ein solches Verfahren prinzipiell auch bei sogenannten Pico Projektoren und Head-up-Displays, die gleichfalls Lichtscanner verwenden, die als MEMS (Mikro-Elektro-Mechanische-Systeme) ausgebildet sind. Im Gegensatz zu solchen Projektionssystemen, die oft in der Unterhaltungselektronik eingesetzt werden, müssen jedoch bei Scheinwerfern deutlich höhere Laserleistungen eingebracht werden, wobei andererseits nicht die Notwendigkeit besteht, eine farbige Lichtverteilung darzustellen. Wie oben erwähnt, wird üblicherweise mit blauen Laserlicht, das beispielsweise von Laserdioden stammt, gearbeitet. Im Hinblick auf die benötigte hohe Laserleistung in der Größenordnung von 5 bis 30 Watt, ist es wichtig, die in einem Scheinwerfer installierte Laserleistung bestmöglich zu nützen.

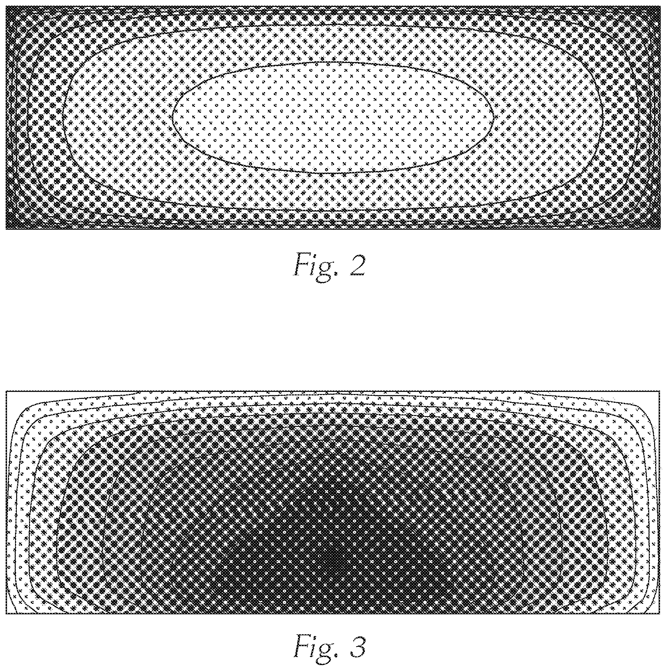

Die meisten bekannten Lichtscanner, für welche im Folgenden auch gelegentlich der Begriff "Mikroscanner" verwendet wird, arbeiten nach einem resonanten Antriebsprinzip. Die verwendeten Mikrospiegel werden dabei in ihrer Resonanzfrequenz angeregt und schwingen sinusförmig. Gerade dieser sinusförmige Verlauf stellt hinsichtlich der Ausnutzung der installierten Laserleistung ein großes Problem dar, wozu auf Fig. 2 verwiesen wird. Für diese Figur wurde beispielsweise eine konstante Laserleistung von $P_{Laser}$ = 1W vorausgesetzt und eine Auflösung von 60 × 30 Pixeln festgelegt, was lediglich ein mögliches Beispiel darstellt. Man erkennt, dass aufgrund der sinusförmigen Bewegung des Mikrospiegels in der Bildmitte deutlich weniger optische Leistung (0,23 mW / Pixel) vorhanden ist, als in den Randbereichen, in welchen die Leistung pro Pixel 1,75 mW beträgt und in den vier Ecken des Bildes sogar 9,63 mW.

Eine solche Lichtverteilung ist bei Projektionsanwendungen speziell bei Head-up-Displays und Pico Projektoren nicht gewünscht, da dort alle Bildpunkte gleich hell seien sollten. Aus diesem Grund ist es bekannt, die Helligkeitsänderung aufgrund des sinusförmigen Verlaufes zu kompensieren, indem die Laserleistung synchron zur Spiegelschwingung moduliert wird, wobei die Laserleistung zum Rand hin reduziert wird, um eine homogene Lichtverteilung zu erzielen, in welcher jedes Pixel gleich hell ist. Dabei wird die maximale Helligkeit des kompensierten Bildes der niedrigsten Helligkeit des unkompensierten Bildes angepasst, was, bezogen auf Fig. 2 bedeutet, dass in einem kompensierten Leuchtbild jedes Pixel eine auftreffende Laserleistung von 0,23 mW/Pixel aufweist.

Wegen der Kompensation des Helligkeitsverlaufes muss die in das System eingebrachte mittlere Laserleistung um 60 % reduziert werden, d.h. in dem Beispiel gemäß Fig. 2 werden von einer Laserleistung die $P_{Laser}$ = 1 W die Mittel lediglich 0,4 W benutzt, wobei zu beachten ist, dass hier von mittleren Leistungen die Rede ist. Auch in dieser Lichtverteilung muss die Laserdiode in der Lage sein, kurzzeitig eine optische Leistung von 1 W aufzubringen. Da die Leistung jedoch in den Randbereichen reduziert wird, ergibt sich eine mittlere Leistung, die deutlich geringer ist.

Das aufgezeigte Problem verschärft sich noch erheblich bei Anwendungen des scannenden Verfahrens auf Kraftfahrzeugscheinwerfer. Lichtverteilungen, die für Hauptlichtfunktionen in Fahrzeugscheinwerfern erzeugt werden, sind nämlich in den seltensten Fällen in allen Bildpunkten gleich hell. Im Gegenteil, bei den Lichtverteilungen eines Kraftfahrzeugscheinwerfers ist es sogar erwünscht, dass die Randbereiche deutlich dunkler sind als die Bildmitte, in der meist ein sogenannter Lichtspot erzeugt werden soll. Dieser Lichtspot beleuchtet die Fahrbahn, wogegen die Randbereiche die Fahrbahnumgebung ausleuchten. Zur Verdeutlichung soll eine beispielshafte Lichtverteilung betrachtet werden, die als Zusatz-Fernlicht geeignet und in Fig. 3 dargestellt ist. Hier ist erkenntlich, dass in der Bildmitte eine hohe Lichtleistung erforderlich ist (100 %), wogegen in den Randbereichen die Helligkeit bereits deutlich abnimmt, wobei Bereiche mit 30 % und 5 % eingezeichnet und bezeichnet sind. Kompensiert man in diesem Fall die Laserleistung eines sinusförmig in zwei Richtungen schwingenden Mikrospiegels, so kann man zeigen, dass nur noch 13 % der installierten Laserleistung ausgenützt werden.

Eine Möglichkeit dem genannten Problem zumindest teilweise zu begegnen liegt darin, die Scangeschwindigkeit, d.h. bei einem Spiegel die Winkelablenkung nach der Zeit da/dt zu variieren. Da ein langsam scannender Lichtpunkt ("Spot") mehr Licht im Lichtkonversionsmittel erzeugt als ein schnell wandernder Spot, kann man auf diese Weise die Lichtverteilung gleichfalls beeinflussen. Dazu benötigt man allerdings Mikrospiegel, die nicht mehr resonant schwingen sondern zumindest in einer Koordinatenrichtung im Wesentlichen linear angesteuert werden können.

Bei einer linear gesteuerten Antriebsachse des Mikrospiegels kann die Ausnutzung der installierten Laserleistung dadurch bereits deutlich erhöht werden, nämlich auf etwa 20 %. Wird auch die zweite Achse des Mikrospiegels linear angetrieben, so lässt sich eine weitere Erhöhung der Ausnutzung theoretisch bis auf 30 % erreichen. Allerdings bedeutet auch eine 30 %-ige Ausnutzung der Laserleistung, dass man drei Mal so viel an Laserleistung installieren muss, als theoretisch notwendig wäre. In der Praxis führt dies dazu, dass man z.B. die dreifache Anzahl von Laserdioden in einem Scheinwerfer installieren muss, was sich, nicht zuletzt wegen der Notwendigkeit der Fokussierung, erheblich auf den Preis eines solchen Scheinwerfers auswirkt.

Ein Verfahren bzw. ein Scheinwerfer, bei welchen die Scangeschwindigkeit vermindert wird, um Bereiche mit höherer Intensität zu erzeugen, sind auch aus der DE 10 2012 205 437 A1 bekannt geworden, wobei die Problematik der mangelnden Effizienz angesprochen wird. Außerdem kann der Spotdurchmesser des Laserstrahls geändert werden, wobei jedoch die Laserleistung nicht geändert wird.

Weiters ist in der US 2009/0046474 A1 ein Scheinwerfer beschrieben, bei welchem das Licht zumindest einer Lichtquelle über einen angesteuerten Spiegel, der um ein oder zwei Achsen verdrehbar ist, über eine Abbildungsoptik scannend auf die Fahrbahn gelenkt wird. Die Lichtquelle kann während des Scannens ein- oder ausgeschaltet werden und die Helligkeit kann durch die Drehgeschwindigkeit des Spiegels geändert werden. Ein Scannen eines Laserstrahls über einen Phosphor zum Erzeugen eines Leuchtbildes ist in diesem Dokument allerdings nicht beschrieben.

Ein Scheinwerfer, der nach einem Verfahren bzw. ein Scheinwerfer, wie eingangs angegeben, sind aus der US 2014/0029282 bekannt geworden, wobei entweder die Scangeschwindigkeit oder die Intensität des Laserstrahls geändert wird, um ein adaptives Leucht-/Lichtbild zu erzeugen.

Weitere Verfahren aus dem Stand der Technik sind beispielsweise in der EP 2 690 352 A1 und der WO 2014/121314 A1 offenbart.

Eine Aufgabe der Erfindung liegt darin, ein Verfahren sowie einen nach einem solchen Verfahren arbeitenden Scheinwerfer zu schaffen, bei welchem eine verbesserte Ausnutzung der installierten Laserleistung bei möglichst geringem Aufwand für die Ansteuerung, insbesondere des Mikrospiegels möglich ist.

Diese Aufgabe wird mit einem Verfahren entsprechend Anspruch 1 gelöst.

Dabei ist erfindungsgemäß vorgesehen, dass das gewünschte Leuchtbild in eine Pixelmenge mit n Zeilen und m Spalten unterteilt wird,

in einem ersten Schritt zum Optimieren der Steuerkennlinien entsprechend der gewünschten Lichtverteilung für jedes Pixel der Pixelmenge die benötigte Beleuchtungsstärke $E_{ij}$ festgelegt wird,

in einem zweiten Schritt jene Spalte/Zeile ausgewählt wird, in welcher in Summe über deren n Pixel die maximale Beleuchtungsstärke, nämlich die Summenbeleuchtungsstärke dieser Spalte c2/Zeile benötigt wird,

in einem dritten Schritt von dieser Summenbeleuchtungsstärke ausgehend berechnet wird, welche Zeiteinheit pro Beleuchtungsstärke tslx in dieser Spalte/Zeile im Mittel zur Verfügung steht, nämlich tslx = TS / Ec2 ges., wobei TS die halbe Periodendauer der Spaltenperiode/Zeilenperiode und Ec2 ges. die in dieser halben Periodendauer der Spaltenperiode benötigte Summe aller vordefinierten Beleuchtungsstärkewerte pro Pixel bedeuten,

in einem vierten Schritt die Beleuchtungsstärken $E_{c2n}$ der Spalte/Zeile, welche in einer Reihe vorliegen, verwendet werden, um eine neue Reihe zu erstellen, wobei sich die Beleuchtungsstärke $E'_{c2n}$ jedes Gliedes der neuen Reihe zu

$$E'_{c2n} = \sum_{j=1}^{n} E_{c2j}$$

ergibt,

in einem fünften Schritt jedes Glied der neuen Reihe mit der Zeiteinheit pro Beleuchtungsstärke $t_{1x}$ multipliziert wird, um eine neue Zeitreihe zu erhalten, die über den für jedes Pixel zur Verfügung stehenden Auslenkwinkel $\alpha_{V'} = \alpha_{Vmax}/n$ als neue optimierte Steuerkennlinie festgelegt wird, und jedes Glied der neuen Zeitreihe mit dem jeden Pixel zur Verfügung stehenden Auslenkwinkel $\alpha' = \alpha_{max}/n$ multipliziert wird, wodurch man für jedes Pixel der Spalte/Zeile eine Auslenkung und damit eine optimierte Steuerkennlinie erhält und

in einem sechsten Schritt diese Steuerkennlinie zur Ansteuerung des Mikrospiegels für jede Spalte/Zeile verwendet wird.

In vielen Fällen erhält man ein hinreichend optimiertes Ergebnis, wenn die verbleibende Achse mit einer festgelegten, nicht optimierten Steuerkennlinie angesteuert wird.

Andererseits kann es doch von Vorteil sein, falls

in einem siebten Schritt die Ausnutzung der Laserleistung pro Pixel ausgewertet wird und die Zeile/Spalte mit der besten Ausnutzung $\eta_{max}$ ermittelt wird,

in einem achten Schritt jene Spalte mit der optimale Ausnutzung der installierten Laserleistung ausgewählt und für die Optimierung der Steuerkennlinie der verbleibenden Achse herangezogen wird und im Folgenden in Schritten analog zu dem ersten, zweiten, dritten und vierten Schritt, von der Ausnutzung der installierten Laserleistung pro Pixel ausgehend, vorgegangen wird, wobei in jener Zeile, in der die zuvor ermittelte höchste Ausnutzung der installierten Laserleistung erbracht werden konnte, alle Ausnutzungen der installierten Laserleistung in dem jeweiligen Pixel summiert,

in einem neunten Schritt anschließend von der Ausnutzung $\eta_{r2\,ges}$ ausgehend berechnet wird, welche Zeiteinheit pro Ausnutzung $t_{Z\eta}$ in dieser Zeile zur Verfügung steht.

$$t_{Z\eta} = T_Z / \eta_{r2\,ges.}$$

wobei $T_Z$ die halbe Periodendauer der Zeilenperiode und $\eta_{r2\,ges.}$ die in dieser halben Periodendauer der Zeilenperiode benötigte Summe aller errechneten oder gemessenen Ausnutzungen der installierten Laserleistung pro Pixel ist,

in einem zehnten Schritt die jeweiligen Ausnutzungswerte der Zeile verwendet werden, um eine neue Reihe zu erstellen, wobei sich die Beleuchtungsstärke $\eta'_{r2m}$ jedes Gliedes der neuen Reihe zu

$$\eta'_{r2m} = \sum_{j=1}^{m} \eta_{r2j}$$ ergibt,

in einem elften Schritt die Glieder der neuen Reihe mit der Zeiteinheit pro Ausnutzung $t_{Z\eta}$, multipliziert und über den, für jedes Pixel zur Verfügung stehenden, Auslenkwinkel $\alpha_H' = \alpha_{Hmax}/m$ als neue optimierte horiontale/vertikale Steuerkennlinie festgelegt werden.

Dabei ergibt sich ein besonders gut optimiertes Ergebnis, falls in einem zwölften Schritt die optimierte Steuerkennlinie für die vertikale/horizontale und die horizontale/ vertikale Achse angewendet und analog zu dem siebten Schritt die Ausnutung der installierten Laserleistung je Pixel ermittelt wird.

Zweckmäßig kann es in bestimmten Fällen auch sein, wenn die Optimierung der Steuerkennlinien schrittweise in umgekehrter Reihenfolge bezüglich der Zeilen und Spalten bzw. Achsen durchgeführt wird, um weiter zwei optimierte Steuerkennlinien zu erhalten. Dabei ist es empfehlenswert, wenn eine Auswahl aus den gesamten erhaltenen, optimierten Steuerkennlinien in Abhängigkeit von dem gewünschten Leuchtbild erfolgt, wobei die günstigste Kombination zur Ansteuerung des Lichtscanners verwendet wird.

Die Aufgabe der Erfindung wird auch mit einem Scheinwerfer der oben angegebenen Art gelöst, bei welchem die Recheneinheit zur Durchführung des Verfahrens nach einem oder mehreren der Ansprüche 1 bis 6, die vorstehend genannt wurden, eingerichtet ist.

Die Erfindung samt weiteren Vorteilen ist im Folgenden an Hand beispielsweiser Ausführungsformen näher erläutert, die in der Zeichnung veranschaulicht sind. In dieser zeigt

Fig. 1 die für die Erfindung wesentlichen Komponenten eines Scheinwerfers und deren Zusammenhang in einer schematischen Darstellung,

Fig. 2 die Leistungsverteilung an einem Leuchtbild, das von einem scannenden Laserstrahl erzeugt wird, der durch einen herkömmlichen, um zwei Achsen schwingenden Spiegel abgelenkt wird,

Fig. 3 eine gewünschte, beispielshafte Lichtverteilung für einen Scheinwerfer,

Fig. 4 die Aufteilung eines Leuchtbildes in Zeilen und Spalten,

Fig. 5a und 5b ein Ablaufdiagramm zweier Varianten des erfindungsgemäßen Verfahrens,

Fig. 6 ein gewünschtes Ausgangsleuchtbild,

Fig. 7 eine optimierte Steuerkennlinie,

Fig. 8 in einem Diagramm die Ausnutzung der installierten Laserleistung nach Durchführung eines Optimierungsverfahrens,

Fig. 9 eine weitere optimierte Steuerkennlinie,

Fig. 10 in einem Diagramm die Ausnutzung der installierten Laserleistung nach Durchführung eines weiteren Optimierungsverfahrens und

Fig. 11 in einem anderen Diagramm die Ausnutzung der installierten Laserleistung nach Durchführung eines weiteren Optimierungsverfahrens.

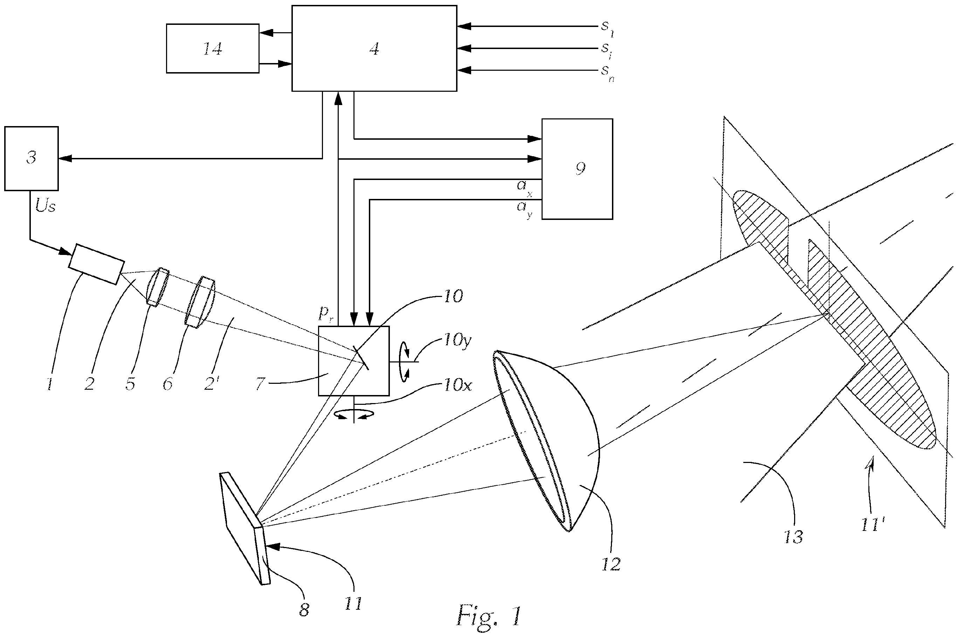

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Laserlichtquelle 1, die einen Laserstrahl 2 abgibt, und welcher eine Laseransteuerung 3 zugeordnet ist, wobei diese Ansteuerung 3 zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" wird in Zusammenhang mit der vorliegenden Erfindung verstanden, dass die Intensität der Laserlichtquelle geändert werden kann, sei es kontinuierlich oder gepulst, im Sinne eines Ein- und Ausschaltens. Wesentlich ist, dass die Lichtleistung analog dynamisch geändert werden kann, je nachdem, an welcher Winkelposition ein später näher beschriebener Spiegel steht. Zusätzlich gibt es noch die Möglichkeit des Ein- und Ausschaltens für eine gewisse Zeit, um definierte Stellen nicht zu beleuchten oder auszublenden. Ein Beispiel eines dynamischen Ansteuerungskonzepts zur Erzeugung eines Bildes durch einen scannenden Laserstrahl ist etwa in dem Dokument A 514633 der Anmelderin beschrieben.

Die Laserlichtquelle enthält in der Praxis oft mehrere Laserdioden, beispielsweise sechs von z.B. je 1 Watt, um die gewünschte Leistung bzw. den geforderten Lichtstrom zu erreichen. Das Ansteuersignal der Laserlichtquelle 1 ist mit $U_s$ bezeichnet.

Die Laseransteuerung 3 erhält ihrerseits wiederum Signale von einer zentralen Recheneinheit 4, welcher Sensorsignale $s_1$ ... $s_i$ ... $s_n$ zugeführt werden können. Diese Signale können einerseits beispielsweise Schaltbefehle zum Umschalten von Fernlicht auf Abblendlicht sein oder andererseits Signale, die beispielsweise von Sensoren $S_1...S_n$, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen. Die hier schematisch als Block gezeichnete Recheneinheit 4 kann vollständig oder teilweise in dem Scheinwerfer enthalten sein und dient insbesondere auch zur Durchführung des weiter unten beschriebenen Verfahrens der Erfindung.

Die Laserlichtquelle 1 gibt beispielsweise blaues oder UV-Licht ab, wobei der Laserlichtquelle eine Kollimatoroptik 5 sowie eine Fokussieroptik 6 nachgeordnet ist. Die Ausbildung der Optik hängt unter anderem von der Art, Anzahl und der räumlichen Platzierung der verwendeten Laserdioden, von der erforderlichen Strahlqualität und von der gewünschten Laserspotgröße am Lichtkonversionsmittel ab.

Der fokussierte bzw. geformte Laserstrahl 2' gelangt zu einem Lichtscanner 7 und wird von einem Mikrospiegel 10 auf ein im vorliegenden Beispiel als Leuchtfläche ausgebildetes Lichtkonversionsmittel 8 reflektiert, welches z.B. in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist.

Man verwendet Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht dabei durch additive Farbmischung. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen beispielsweise Optokeramiken in Frage, das sind transparente Keramiken, wie beispielsweise YAG:Ce (ein Yttrium-Aluminium-Granat mit Cer dotiert).

Angemerkt sei an dieser Stelle, dass in der Zeichnung das Lichtkonversionsmittel als Phosphorfläche gezeigt ist, auf welcher der scannende Laserstrahl bzw. scannende Laserstrahlen ein Bild erzeugen, das von dieser Seite des Phosphors ausgehend projiziert wird. Es ist jedoch auch möglich, einen durchscheinenden Phosphor zu verwenden, bei welchem der Laserstrahl, von der der Projektionslinse abgewandten Seite kommend, ein Bild erzeugt, wobei sich jedoch die Abstrahlseite auf der der Projektionslinse zugewandten Seite des Lichtkonversionsmittels befindet. Es sind somit sowohl reflektierende als auch transmissive Strahlengänge möglich, wobei letztlich auch eine Mischung von reflektierenden und transmissiven Strahlengängen nicht ausgeschlossen ist.

Der im vorliegenden Beispiel um zwei Achsen schwingende Mikrospiegel 10 wird von einer Spiegelansteuerung 9 mit Hilfe von Treibersignalen $a_x$, $a_y$ angesteuert und z.B. in zwei zueinander orthogonalen Richtungen x, y abgelenkt. Auch die Spiegelansteuerung 9 wird von der Recheneinheit 4 gesteuert, um die Schwingungsamplituden des Mikrospiegels 10 sowie dessen momentane Winkelgeschwindigkeit einstellen zu können, wobei auch asymmetrisches Schwingen um die jeweilige Achse einstellbar sein kann. Die Ansteuerung von Mikrospiegeln ist bekannt und kann auf vielerlei Art erfolgen, z.B. elektrostatisch, elektromagnetisch oder elektrodynamisch. Bei erprobten Ausführungsformen der Erfindung verschwenkt der Mikrospiegel 10 in x-Richtung um eine erste Drehachse 10x und in y-Richtung um eine zweite Drehachse 10y und sein maximaler Ausschlag führt in Abhängigkeit von seiner Ansteuerung zu Auslenkungen in dem resultierenden Leuchtbild von beispielsweise +/- 35° in x-Richtung und - 12° bis +6° in y-Richtung, wobei die Spiegelauslenkungen die Hälften dieser Werte betragen.

Die Position des Mikrospiegels 10 wird zweckmäßigerweise mit Hilfe eines Positionssignals $p_r$ an die Spiegelansteuerung 9 und/oder an die Recheneinheit 4 rückgemeldet. Es sei angemerkt, dass auch andere Strahlablenkmittel, wie z.B. bewegbare Prismen, Verwendung finden können, wenngleich die Verwendung eines Mikrospiegels bevorzugt wird.

Der Laserstrahl 2' scannt somit über das Lichtkonversionsmittel 8, das im Allgemeinen eben ist, jedoch nicht eben sein muss, und erzeugt ein Leuchtbild 11 mit einer vorgegebenen Lichtverteilung. Dieses Leuchtbild 11 wird nun mit einem Abbildungssystem 12 als Lichtbild 11' auf die Fahrbahn 13 projiziert. Dabei wird die Laserlichtquelle mit hoher Frequenz gepulst oder kontinuierlich angesteuert, sodass entsprechend der Position des Mikrospiegels beliebige Lichtverteilungen nicht nur einstellbar sind - beispielsweise Fernlicht/Abblendlicht - sondern auch rasch änderbar sind, wenn dies eine besondere Gelände- oder Fahrbahnsituation erfordert, beispielsweise wenn Fußgänger oder entgegenkommende Fahrzeuge durch einen oder mehrere der Sensoren $s_1...s_n$ erfasst werden und dementsprechend eine Änderung der Geometrie und/oder Intensität des Lichtbildes 11' der Fahrbahnausleuchtung erwünscht ist. Das Abbildungssystem 12 ist hier vereinfacht als Linse dargestellt.

Der Begriff "Fahrbahn" wird hier zur vereinfachten Darstellung verwendet, denn selbstverständlich hängt es von den örtlichen Gegebenheiten ab, ob sich das Lichtbild 11' tatsächlich auf der Fahrbahn befindet oder auch darüber hinaus erstreckt. Prinzipiell entspricht das Bild 11' einer Projektion auf eine vertikale Fläche entsprechend der einschlägigen Normen, die sich auf die KFZ-Beleuchtungstechnik beziehen.

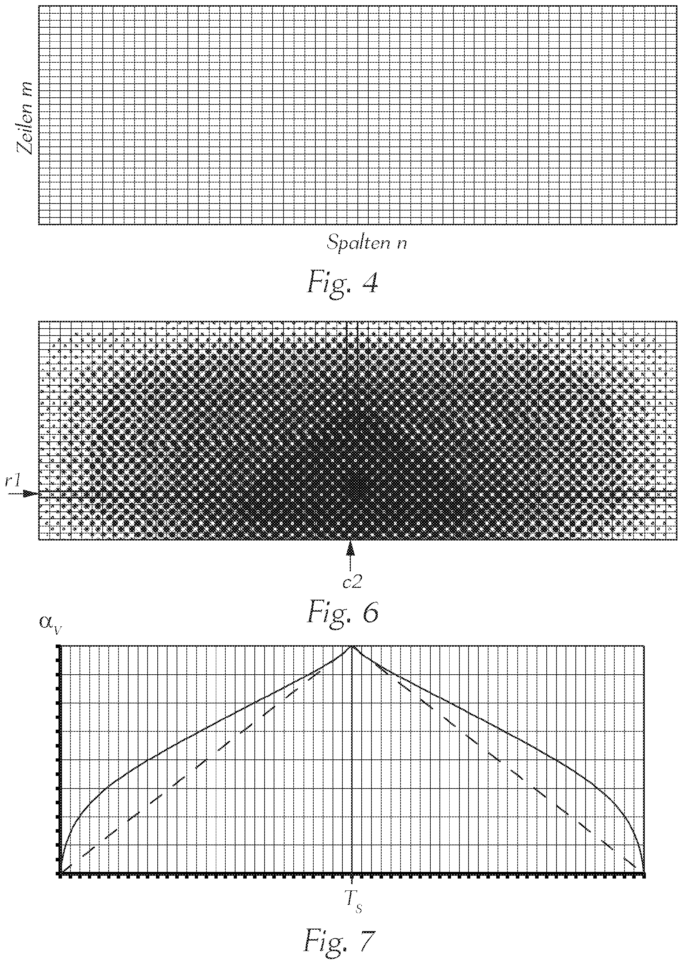

Nachstehend werden Ausführungsbeispiele des erfindungsgemäßen Verfahrens im Detail erläutert. Zunächst wird das gewünschte Leuchtbild in eine Pixelmenge mit n Zeilen und m Spalten unterteilt, wobei in dem in Fig. 4 gezeigten Raster m = 30 und n = 60 ist, somit 30 Zeilen und 60 Spalten vorhanden sind. Es soll klar sein, dass hier jede beliebige, technisch vertretbare andere Auflösung gewählt werden kann. Im veranschaulichten Beispiel sind jedenfalls 30*60 = 1800 Pixelfelder vorhanden.

Nun wird ermittelt in welcher Spalte und in welcher Zeile sich jenes Pixel befindet, für das die höchste optische Leistung erbracht werden muss, wobei diese optische Leistung für jedes Pixel von der gewünschten Lichtverteilung bzw. von der gewünschten Intensität in dem jeweiligen Pixel abhängt. Die entsprechenden Vorgaben werden für jedes Pixel als bestimmte Beleuchtungsstärke in 1x definiert und diese Werte werden verwendet, um unter Berücksichtigung der Effizienz der Optik des Scheinwerfers sowie gegebenenfalls der Effizienz eines Lichtkonversionsmittels die benötigte optische Leistung in Watt pro Pixel zu errechnen.

Die Erfindung sieht nun vor, dass die horizontale und/ oder die vertikale Steuerkennlinie für den Mikrospiegel an eine ausgewählte Zeile und/oder Spalte hinsichtlich der benötigten optischen Leistung der Pixel angepasst wird und die angepasste horizontale und/ oder die vertikale Steuerkennlinie zur Ansteuerung des Mikrospiegels verwendet wird. Hierbei ist der allgemeinste Fall jener, bei welchem der Mikrospiegels hinsichtlich beider Achsen "linear" angesteuert wird, somit kein resonanter Betrieb gewählt wird. Es soll jedoch klar sein, dass die Erfindung auch nur auf die Ansteuerung hinsichtlich einer Achse anwendbar ist, nämlich dann, wenn das Scannen nur in einer Achse erfolgt, z.B. mit einem breiten Lichtspot bzw. mit mehreren Mikrospiegeln, die einen Spot übereinander oder nebeneinander scannen.

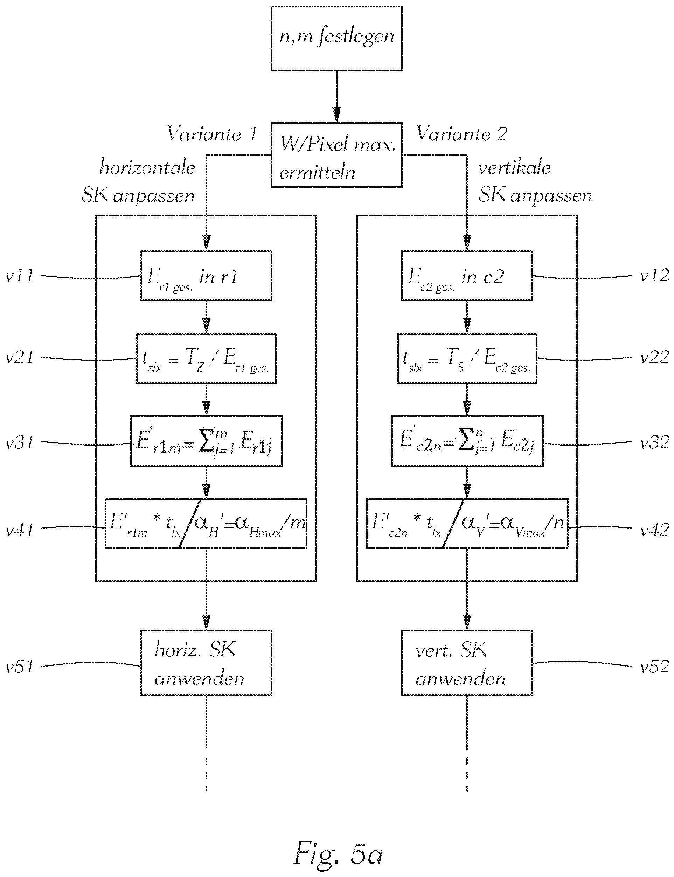

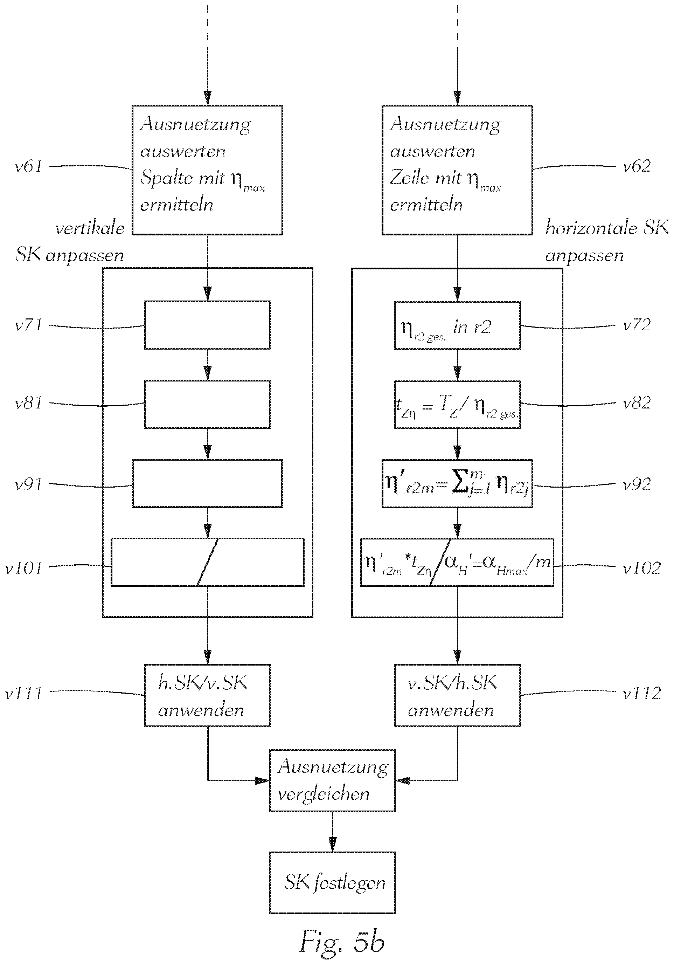

Nach dem bereits erwähnten Festlegen der n Zeilen und m Spalten, dem Festlegen der benötigten Beleuchtungsstärke $E_{ij}$ je Pixel und der Ermittlung der maximal benötigten Leistung je Pixel wird entweder die horizontale oder die vertikale Steuerkennlinie angepasst, d.h. optimiert, sodass sich zwei Varianten ergeben. Es wird zunächst eine Variante der Erfindung beschrieben, bei welcher die vertikale Steuerkennlinie optimiert wird, somit jene, die sich auf die Spalten bezieht und die als "Variante 2" bezeichnet ist, wobei auf **Fig. 5a** und **5b** verwiesen wird.

Schritt v12:

In diesem Schritt wird in jener Spalte, in der die zuvor ermittelte höchste optische Leistung erbracht werden muss, als Spalte c2 definiert und die Summenbeleuchtungsstärke dieser Spalte c2 errechnet. Fig. 6 zeigt das gewünschte Leuchtbild, in dem die Spalte c2 mit der maximalen Beleuchtungsstärke ermittelt wurde.

Die Summenbeleuchtungsstärke ist mit $E_{c2\ ges.}$ bezeichnet.

Schritt v22:

In diesem folgenden Schritt wird von dieser Summenbeleuchtungsstärke ausgehend berechnet, welche Zeiteinheit pro Beleuchtungsstärke $t_{slx}$ in dieser Spalte c2 zur Verfügung steht.

$$t_{slx} = T_S \, / \, E_{c2\ ges.}$$

Hierbei bedeuten $T_s$ die halbe Periodendauer der Spaltenperiode und $E_{c2\ ges.}$ die in dieser halben Periodendauer der Spaltenperiode benötigte Summe aller vordefinierten Beleuchtungsstärkewerte pro Pixel. Unter Spaltenperiode ist die Dauer zu verstehen, welche der Spiegel bei Verschwenken um eine (horizontal) Achse zum Scannen in vertikaler Richtung, somit in Spaltenrichtung, benötigt.

Schritt v32:

Anschließend werden die jeweiligen Beleuchtungsstärken der Spalte c2 $E_{c2n}$, welche in einer Reihe vorliegen, verwendet um eine neue Reihe zu erstellen, wobei sich die Beleuchtungsstärke $E'_{c2n}$ jedes Gliedes der neuen Reihe zu $E'_{c2n} = \sum_{i=1}^{n} E_{c2i}$ ergibt.

Schritt v42:

In diesem folgenden Schritt werden die Glieder der neuen Reihe mit der Zeiteinheit pro Bleuchtungsstärke $t_{Slx}$ multipliziert und sie werden über den für jedes Pixel zur Verfügung stehenden Auslenkwinkel $\alpha_V' = \alpha_{Vmax}/n$ als neue optimierte Steuerkennlinie festgelegt, die für ein Beispiel in Fig. 7 ausgezogen gezeichnet ist und man die Abweichung von der strichliert eingezeichneten linearen Ansteuerung erkennt. Mit $T_s$ ist die halbe Üeriodendauer der Spaltenperiode bezeichnet. Die Abszissenachse stellt in Fig. 7 die Zeit dar, die Auslenkung erfolgt über eine gesamte Spaltenperiode und somit entspricht $T_s$ der Hälfte dieser Zeit.

Schritt v52:

Die optimierte Steuerkennlinie wird nun angewendet und für die verbleibende Achse wird eine lineare, somit nicht optimierte Ansteuerung verwendet.

Schritt v62:

In diesem Schritt wird die Ausnutzung (z.B. in % der Laserleistung pro Pixel) ausgewertet und die Zeile mit der besten Ausnutzung $\eta_{max}$ ermittelt:
Die Auswertung kann entweder rechnerisch erfolgen oder durch Messen ermittelt werden.

Soll die Auswertung durch Messen erfolgen, so wird ein entsprechendes Scheinwerfersystem aufgebaut und für jedes Pixel wird die Ausnutzung der installierten Laserleistung über den Lichtstrom im entstandenen Lichtbild rückgerechnet. Man kann beispielsweise den Lichtstrom für jedes Pixel messen und über die Effizienz des Lichtkonversionsmittels (Phosphors) auf Watt pro Pixel rückrechnen.

Rechnerisch muss man von der möglichen erbringbaren optischen Leistung einer Laserdiode im Lichtbild ausgehen. Beispielsweise liefere eine Laserdiode 1W optische Leistung, die aufgrund des Scanvorgangs auf die beispielsweise 60 × 30 Pixel aufzuteilen sind.

Bei einer linearen Steuerkurve könnte man damit bei diesem Beispiel in jedem Pixel eine optische Leistung von 0,556mW erbringen.

Bei der optimierten Steuerkurve wird diese Leistung von 1 W aber nicht mehr gleichmäßig aufgeteilt sondern entsprechend der optimierten Steuerkurve unterschiedlich schnell über die Pixel hinweg verteilt.

Die durch Anwendung der optimierten Steuerkurve entstehende optische Leistungsverteilung mit einer Laserdiode von beispielsweise einem Watt kann dann verwendet werden, um die für jedes Pixel notwendige Anzahl an Laserdioden zu errechnen, nämlich als die benötigte optische Leistung je Pixel $P_{m,n}$ dividiert durch die erbringbare optische Leistung je Pixel $P_{m,n}$ mit der optimierten Steuerkennlinie bei Verwendung einer Laserdiode mit beispielsweise 1W optischer Leistung.

Somit erhält man die notwendige Anzahl an Laserdioden für die jeweiligen Pixel, wobei natürlich zu runden ist, falls das Ergebnis der Division nicht ganzzahlig ist.

Die Ausnutzung der installierten Laserleistung für jedes Pixel $P_{m,n}$ ergibt sich dann durch die Division der benötigten optischen Leistung in Pixel $P_{m,n}$ durch das Produkt der erbringbaren Leistung einer Laserdiode in Pixel $P_{m,n}$ und der Höchstzahl an benötigten Laserdioden in allen Pixeln.

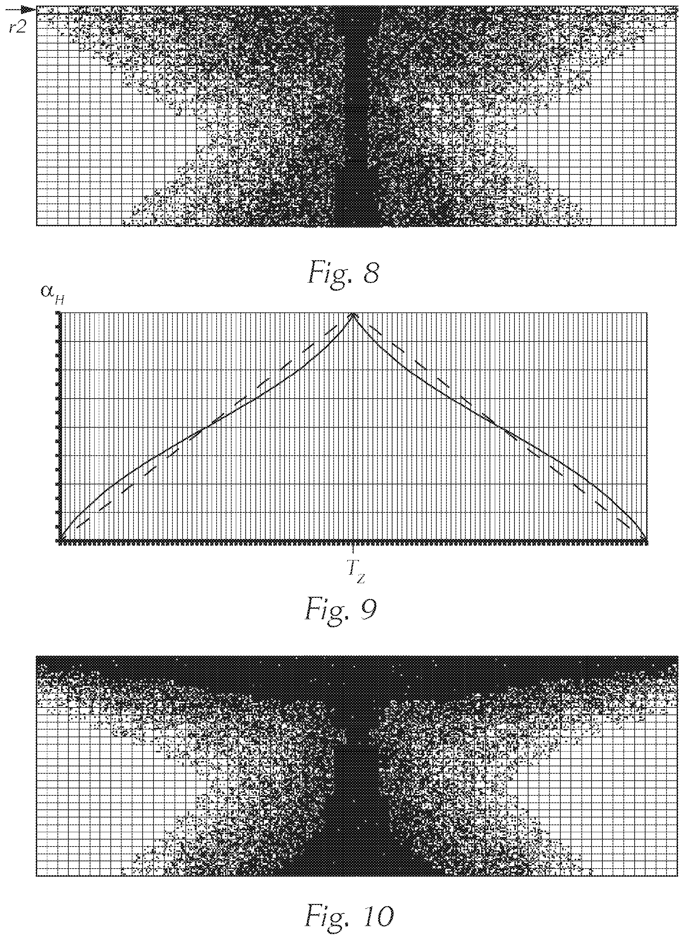

In Fig. 8 ist die für ein repräsentatives Beispiel errechnete bzw. gemessene Ausnutzung der installierten Laserleistung in jedem Pixel dargestellt, wobei einer höheren Ausnützung eine höhere Dichte an Punkten in der Zeichnung entspricht.

Schritt v72:

Es wird nun jene Spalte mit der optimale Ausnutzung der installierten Laserleistung ausgewählt und für die Optimierung der Steuerkennlinie der verbleibenden Achse (in diesem Beispiel die horizontale Steuerkennlinie) herangezogen.

Der Ablauf ist prinzipiell derselbe wie bei der Optimierung der vertikalen Steuerkennlinie in den Verfahrensschritten v12, v22, v32, v42, doch wird nun nicht von der Beleuchtungsstärke ausgegangen sondern von der Ausnutzung der installierten Laserleistung pro Pixel.

Dabei wird in jener Zeile, in der die zuvor ermittelte höchste Ausnutzung der installierten Laserleistung erbracht werden konnte, als Zeile r2 definiert und alle Ausnutzungen der installierten Laserleistung in dem jeweiligen Pixel summiert. Siehe auch Schritt v82.

Schritt v82:

Anschließend wird von der Ausnutzung $\eta_{r2\,ges}$, nämlich der Summe der Ausnutzungen in Schritt v72, ausgehend berechnet, welche Zeiteinheit pro Ausnutzung $t_{Z\eta}$ in dieser Zeile r2 zur Verfügung steht.

$$t_{Z\eta} = T_Z / \eta_{r2\,ges.}$$

wobei $T_Z$ die halbe Periodendauer der Zeilenperiode und $\eta_{r2\,ges.}$ die in dieser halben Periodendauer der Zeilenperiode benötigte Summe aller errechneten oder gemessenen Ausnutzungen der installierten Laserleistung pro Pixel ist.

Schritt v92:

In diesem Schritt werden die jeweiligen Ausnutzungswerte der Zeile r2 verwendet, um eine neue Reihe zu erstellen, wobei sich die Beleuchtungsstärke $\eta'_{r2m}$ jedes Gliedes der neuen Reihe zu

$$\eta'_{r2m} = \sum_{j=1}^{m} \eta_{r2j} \text{ ergibt}.$$

Schritt v102:

Nun werden die Glieder der neuen Reihe mit der Zeiteinheit pro Ausnutzung $t_{Zn}$ multipliziert und über den, für jedes Pixel zur Verfügung stehenden. Auslenkwinkel $\alpha_H' = \alpha_{Hmax}/m$ als neue optimierte Steuerkennlinie für die horizontale Ansteuerung des Mikrospiegels festgelegt. Für das betrachtete Beispiel ist diese Kennlinie in Fig. 9 als ausgezogene Linie dargestellt, die strichlierte Linie entspricht wiederum einer linearen Ansteuerung ohne Opimierung, wobei man erkennen kann, dass die Abweichung der optimierten horizontalen Steuerkennlinie von dem linearen Verlauf nur mehr geringfügig ist.

Schritt v112:

Nun hat man sowohl für die vertikale als auch für die horizontale Achse des Mikroscanners bzw. Mikrospiegels eine optimierte Steuerkennlinie erhalten, die zur Anwendung gelangen kann. Bei dieser Anwendung wird in Analogie zu Schritt v62 die Ausnutzung der installierten Laserleistung entweder errechnet oder in einem Versuchsaufbau gemessen. Diese Ausnutzung ist ineiner Darstellung vergleichbar mit Fig. 8 in **Fig. 10** dargestellt.

Analog dazu erfolgt die Optimierung der Steuerkennlinien der jeweiligen Achsen in umgekehrter Reihenfolge, was zu einer Variante der Erfindung führte, bei welcher die horizontale Steuerkennlinie optimiert wird, somit jene, die sich auf die Zeilen bezieht und die als "Variante 1" bezeichnet ist. Das Ablaufdiagramm der Fig. 5a und 5b zeigt dies in den Schritten v11 bis v111, wobei eine gesonderte Erklärung nicht erforderlich ist, da hier gegenüber der zweiten Variante lediglich Zeilen und Spalten bzw. "horizontal" und vertikal "vertauscht" sind. Die Zeile r1 mit der maximalen Beleuchtungsstärke im gewünschten Leuchtbild ist in der weiter oben bereits genannten Fig. 6 ersichtlich.

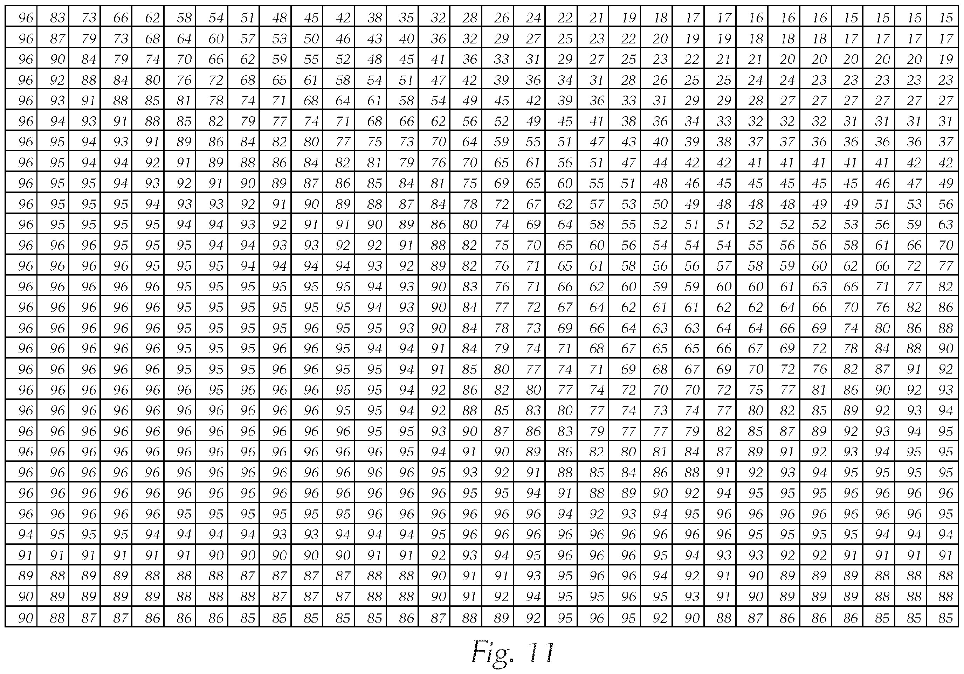

Zuerst erfolgt somit das Optimieren der horizontalen Steuerkennlinie, diese wird dann im Schritt v51 angewendet und anschließend im Schritt v61 ausgewertet um in den Folgeschritten v71 bis v101 die verbleibende vertikale Steuerkennlinie zu optimieren. Die Ausnutzung bei Anwendung des Verfahrens nach der Variante 1 ist in Fig. 11 dargestellt, wobei in dieser Figur, abweichend von den Darstellungen nach den Fig. 8 und 10, der Prozentsatz der Ausnutzung für jedes Pixel in Zahlen eingetragen ist. Aus Gründen einer übersichtlichen Darstellung zeigt Fig. 11 lediglich die "linke" Hälfte des Leuchtbildes, für das gesamte Leuchtbild wäre die "rechte" Hälfte spiegelbildlich zu ergänzen.

Gleichgültig ob die Variante 1 oder 2 angewendet wird, erhält man in den wichtigen Bereichen des Leuchtbildes Ausnutzungen der Laserleistung bis nahe an 100%.

Bei Anwendung der oben beschriebenen Verfahren erhält man verschiedene Steuerkennlinien, die zu unterschiedlichen Ausnutzungen der installierten Laserleistung führen. Genauer gesagt ergeben sich für jede Variante sowohl eine optimierte horizontale als auch eine optimierte vertikale Steuerkennlinie. Welche Variante besser ist hängt vom gewünschten Leuchtbild, der Auflösung, sowie von der gewünschten Intensität in den jeweiligen Pixel ab, sodass sich ein Vergleich der Ergebnisse empfiehlt, der in dem Schritt "Ausnutzung vergleichen" durchgeführt werden kann. Typischerweise passen jedoch die optimierte horizontale und die optimierte vertikale Steuerkennlinie der jeweiligen Variante im Sinne einer bestmöglichen Gesamtausnutzung am besten zusammen.

Bei Betrachtung des in Fig. 5a und 5b gezeigten Verfahrens erkennt man, dass verschiedene Kombinationen oder Vereinfachungen möglich sind. So kann man beispielsweise die bei Variante 1 erhaltene optimierte horizontale Steuerkennlinie mit der bei Variante 2 erhaltenen optimierten vertikalen Steuerkennlinie und umgekehrt anwenden und in einem Vergleich die für einen spezifischen Fall günstigste Kombination der Steuerkennlinien ermitteln, um dann diese Kombination zur Ansteuerung des Mikrospiegels zu verwenden.

In vielen Fällen wird es nicht notwendig sein, den genannten Vergleich anzuwenden, d.h. man führt dann lediglich eine Variante des Verfahrens aus und wendet das erhaltene Ergebnis ohne weitere Überprüfung an. Wie bereits weiter oben erwähnt, wird bei einem Scheinwerfer, dessen Scan nur in einer Achsrichtung erfolgt, die Optimierung naturgemäß nur in dieser einzigen Achse durchgeführt - entsprechend z.B. der Schritte v61 bis v101 der Variante 1.

**Patentansprüche**

1. Verfahren zum Ansteuern eines Lichtscanners (7) in einem Scheinwerfer für Fahrzeuge, wobei der Laserstrahl zumindest einer modulierten Laserlichtquelle (1) mittels des Lichtscanners scannend auf ein Lichtkonversionsmittel (8) gelenkt wird, um an diesem ein Leuchtbild (11) zu erzeugen, welches über ein Abbildungssystem (12) als Lichtbild (11') auf die Fahrbahn projiziert wird, und ein Mikrospiegel (10) des Lichtscanners entsprechend festgelegter Steuerkennlinien in zumindest einer Koordinatenrichtung verschwenkt wird, wobei

das gewünschte Leuchtbild (11) in eine Pixelmenge mit n Zeilen und/ oder m Spalten unterteilt wird,

die horizontale und/oder die vertikale Steuerkennlinie für den Mikrospiegel (10) an zumindest eine ausgewählte Zeile und/oder Spalte hinsichtlich der benötigten optischen Leistung der Pixel angepasst wird, wobei die ausgewählte Zeile und/ oder Spalte jene ist, in welcher in Summe über deren n Pixel die maximale Beleuchtungsstärke benötigt wird, und

die angepasste horizontale und/oder die vertikale Steuerkennlinie zur Ansteuerung des Mikrospiegels verwendet wird,

**dadurch gekennzeichnet, dass**

das gewünschte Leuchtbild in eine Pixelmenge mit n Zeilen und m Spalten unterteilt wird,

in einem ersten Schritt zum Optimieren der Steuerkennlinien entsprechend der gewünschten Lichtverteilung für jedes Pixel der Pixelmenge die benötigte Beleuchtungsstärke $E_{ij}$ festgelegt wird,

in einem zweiten Schritt (v12) jene Spalte (r)/Zeile ausgewählt wird, in welcher in Summe über deren n Pixel die maximale Beleuchtungsstärke, nämlich die Summenbeleuchtungsstärke dieser Spalte c2/Zeile benötigt wird,

in einem dritten Schritt (v22) von dieser Summenbeleuchtungsstärke ausgehend berechnet wird, welche Zeiteinheit pro Beleuchtungsstärke $t_{1x}$ in dieser Spalte (c2)/Zeile im Mittel zur Verfügung steht, nämlich $t_{s1x} = Ts / E_{c2}$ ges., wobei TS die halbe Periodendauer der Spaltenperiode/Zeilenperiode und Ec2 ges. die in dieser halben Periodendauer der Spaltenperiode benötigte Summe aller vordefinierten Beleuchtungsstärkewerte pro Pixel bedeuten,

in einem vierten Schritt (v32) die Beleuchtungsstärken ($E_{c2n}$) der Spalte (c2)/Zeile, welche in einer Reihe vorliegen, verwendet werden, um eine neue Reihe zu erstellen, wobei sich die Beleuchtungsstärke $E'_{c2n}$ jedes Gliedes der neuen

Reihe zu $E'_{c2n} = \sum_{j=1}^{n} E_{c2j}$ ergibt,

in einem fünften Schritt (v42) jedes Glied der neuen Reihe mit der Zeiteinheit pro Beleuchtungsstärke $t_{1x}$ multipliziert wird, um eine neue Zeitreihe zu erhalten, die über den für jedes Pixel zur Verfügung stehenden Auslenkwinkel $\alpha_V'$ = $\alpha_{Vmax}/n$ als neue optimierte Steuerkennlinie festgelegt wird, und jedes Glied der neuen Zeitreihe mit dem jeden Pixel zur Verfügung stehenden Auslenkwinkel $\alpha' = \alpha_{max}/n$ multipliziert wird, wodurch man für jedes Pixel der Spalte/Zeile eine Auslenkung und damit eine optimierte Steuerkennlinie erhält und in einem sechsten Schritt (v52) diese Steuerkennlinie zur Ansteuerung des Mikrospiegels für jede Spalte/Zeile verwendet wird.

2. Verfahren nach Anspruch 1, **dadurch gekennzeichnet, dass** die verbleibende Achse mit einer festgelegten, nicht optimierten Steuerkennlinie angesteuert wird.

3. Verfahren nach Anspruch 1, **dadurch gekennzeichnet, dass**

in einem siebten Schritt (v62) die Ausnutzung der Laserleistung pro Pixel ausgewertet wird und die Zeile/Spalte mit der besten Ausnutzung $\eta_{max}$ ermittelt wird,

in einem achten Schritt (v72) jene Spalte mit der optimale Ausnutzung der installierten Laserleistung ausgewählt und für die Optimierung der Steuerkennlinie der verbleibenden Achse herangezogen wird und im Folgenden in Schritten analog zu dem ersten (v11), zweiten (v22), dritten (v32) und vierten (v42) Schritt, von der Ausnutzung der installierten Laserleistung pro Pixel ausgehend, vorgegangen wird, wobei in jener Zeile (r2), in der die zuvor ermittelte höchste Ausnutzung der installierten Laserleistung erbracht werden konnte, alle Ausnutzungen der installierten Laserleistung in dem jeweiligen Pixel summiert,

in einem neunten Schritt (v82) Anschließend von der Ausnutzung $\eta_{r2\ ges.}$ ausgehend berechnet wird, welche Zeiteinheit pro Ausnutzung $t_{Z\eta}$ in dieser Zeile (r2) zur Verfügung steht.

$$t_{Z\eta} = T_Z / \eta_{r2\ ges.}$$

wobei $T_Z$ die halbe Periodendauer der Zeilenperiode und $\eta_{r2\ ges.}$ die in dieser halben Periodendauer der Zeilenperiode benötigte Summe aller errechneten oder gemessenen Ausnutzungen der installierten Laserleistung pro Pixel ist, in einem zehnten Schritt (v92) die jeweiligen Ausnutzungswerte der Zeile (r2) verwendet werden, um eine neue Reihe zu erstellen, wobei sich die Beleuchtungsstärke $\eta'_{r2m}$ jedes Gliedes

der neuen Reihe zu $\eta'_{r2m} = \sum_{j=1}^{m} \eta_{r2j}$ ergibt,

in einem elften Schritt (v102) die Glieder der neuen Reihe mit der Zeiteinheit pro Ausnutzung $t_{Z\eta}$ multipliziert und über den, für jedes Pixel zur Verfügung stehenden, Auslenkwinkel $\alpha_H'$ = $\alpha_{Hmax}/m$ als neue optimierte horiontale/vertikale Steuerkennlinie festgelegt werden.

4. Verfahren nach Anspruch 1 und 3, **dadurch gekennzeichnet, dass** in einem zwölften Schritt (v112) die optimierte Steuerkennlinie für die vertikale/horizontale und die horizontale/vertikale Achse angewendet und analog zu dem siebten Schritt (v62) die Ausnutung der installierten Laserleistung je Pixel ermittelt wird.

5. Verfahren nach den Ansprüchen 1, 3 und 4, **dadurch gekennzeichnet, dass** die Optimierung der Steuerkennlinien schrittweise (Schritte v11 bis v111) in umgekehrter Reihenfolge bezüglich der Zeilen und Spalten bzw. Achsen durchgeführt wird, um weiter zwei optimierte Steuerkennlinien zu erhalten.

6. Verfahren nach einem der Ansprüche 1 bis 5, **dadurch gekennzeichnet, dass** eine Auswahl aus den gesamten erhaltenen, optimierten Steuerkennlinien in Abhängigkeit von dem gewünschten Leuchtbild erfolgt, wobei die günstigste Kombination zur Ansteuerung des Lichtscanners verwendet wird.

7. Scheinwerfer für Fahrzeuge, mit zumindest einer modulierten Laserlichtquelle (1), deren Laserstrahl mittels eines Lichtscanners (7) scannend auf ein Lichtkonversionsmittel (8) lenkbar ist, um an diesem ein Leuchtbild (11) zu erzeugen, welches über ein Abbildungssystem (12) als Lichtbild (11') auf die Fahrbahn projiziert wird, und ein Mikrospiegel (10) des Lichtscanners entsprechend festgelegter Steuerkennlinien in zumindest einer Koordinatenrichtung verschwenkbar ist, sowie mit einer Laseransteuerung (3) und einer dieser zugeordneten Recheneinheit (4), **dadurch gekennzeichnet, dass** die Recheneinheit (4) zur Durchführung des Verfahrens nach einem oder mehreren der vorgehenden Ansprüche eingerichtet ist.

**Claims**

1. Method for controlling a light scanner (7) in a headlamp for vehicles, wherein the laser beam of at least one modulated laser light source (1) is directed by means of the light scanner in a scanning manner onto a light conversion means (8) in order to generate a luminous image (11) thereon which is projected onto the roadway as a luminous image (11') via an imaging system (12), and a micromirror (10) of the light scanner is pivoted in at least one coordinate direction in accordance with defined control characteristics, wherein

the desired light image (11) is divided into a pixel set with n rows and/or m columns
the horizontal and/or the vertical control characteristic for the micromirror (10) is adapted to at least one selected row and/or column with respect to the required optical power of the pixels, the selected row and/or column being the one in which the maximum illumination intensity is required in sum over its n pixels, and the adapted horizontal and/or the vertical control characteristic is used to drive the micromirror, **characterized in that** the desired illuminated image is divided into a pixel set with n rows and m columns, in a first step, for optimizing the control characteristics according to the desired light distribution, the required illuminance $E_{ij}$ is determined for each pixel of the pixel set, in a second step (v12) that column (r)/row is selected in which in sum over its n pixels the maximum illuminance, namely the sum illuminance of this column c2/row is required, in a third step (v22), starting from this total illuminance, it is calculated which time unit per illuminance $t_{lx}$ is available on average in this column (c2)/row, namely $t_{slx} = T_S / E_{c2}$ total, where TS is the half-period duration of the column period/row period and Ec2 total is the total of all predefined illuminance values per pixel required in this half-period duration of the column period, in a fourth step (v32), the illuminances ($E_{c2n}$) of the column (c2)/row which are present in a row are used to create a new row, the illuminance $E'_{c2n}$ of each member of the new row resulting

$$in \; E'_{c2n} = \sum_{j=1}^{n} E_{c2j} \, ,$$

in a fifth step (v42), each member of the new series is multiplied by the unit time per illuminance $t_{lx}$ to obtain a new time series which is determined as a new optimized control characteristic by the deflection angle $\alpha v' = \alpha_{Vmax} / n$ available for each pixel, and each member of the new time series is multiplied by the deflection angle $\alpha' = \alpha_{max} / n$ available for each pixel, thereby obtaining a deflection and thus an optimized control characteristic for each pixel of the column/row, and in a sixth step (v52), this control characteristic is used to control the micromirror for each column/row.

2. Method according to claim 1, **characterized in that** the remaining axis is controlled with a fixed, non-optimized control characteristic.

3. Method according to claim 1, **characterized in that**

in a seventh step (v62) the utilization of the laser power per pixel is evaluated and the row/column with the best utilization $\eta_{max}$ is determined, in an eighth step (v72), that column with the best utilization of the installed laser power is selected and used for optimizing the control characteristic of the remaining axis, and in the following steps analogous to the first (v11), second (v22), third (v32) and fourth (v42) steps, starting from the utilization of the installed laser power per pixel, whereby **in that** line (r2) in which the previously determined highest utilization of the installed laser power could be achieved, all utilizations of the installed laser power in the respective pixel are summed up,

in a ninth step (v82) subsequently, starting from the utilization $\eta_{r2\,ges.}$, it is calculated which time unit per utilization $t_{Z\eta}$ is available in this line (r2).

$$t_{Z\eta} = T_Z \, / \, \eta_{r2\,ges.}$$

where Tz is the half period of the line period and $\eta_{r2\,ges.}$ is the sum of all calculated or measured utilizations of the installed laser power per pixel required in this half period of the line period,

in a tenth step (v92) the respective utilization values of the row (r2) are used to create a new row, wherein the illuminance $\eta'_{r2m}$ of each member of the new row results in $\eta'_{r2m} = \sum_{j=1}^{m} \eta_{r2j}$,

in an eleventh step (v102), the members of the new series are multiplied by the time unit per utilization $t_{Z\eta}$ and are determined as a new optimized horizontal/vertical control characteristic via the deflection angle $\alpha_H' = \alpha_{Hmax}/m$ available for each pixel.

**4.** Method according to claims 1 and 3, **characterized in that** in a twelfth step (v112) the optimized control characteristic is applied for the vertical/horizontal and the horizontal/vertical axis and the utilization of the installed laser power per pixel is determined analogously to the seventh step (v62).

**5.** Method according to claims 1, 3 and 4, **characterized in that** the optimization of the control characteristics is carried out stepwise (steps v11 to v111) in reverse order with respect to the rows and columns and axes, respectively, to further obtain two optimized control characteristics.

**6.** Method according to any one of claims 1 to 5, **characterized in that** a selection is made from the entire optimized control characteristics obtained as a function of the desired light image, the most favorable combination being used to drive the light scanner.

**7.** Headlamp for vehicles, having at least one modulated laser light source (1), the laser beam of which can be directed by means of a light scanner (7) in a scanning manner onto a light conversion means (8) in order to generate a luminous image (11) on the latter, which is projected onto the roadway as a luminous image (11') via an imaging system (12), and a micromirror (10) of the light scanner can be pivoted in at least one coordinate direction in accordance with defined control characteristics, and having a laser drive (3) and a computing unit (4) associated therewith, **characterized in that** the computing unit (4) is set up to carry out the method according to one or more of the preceding claims.

**Revendications**

**1.** Procédé de commande d'un scanner de lumière (7) dans un projecteur pour véhicules, le faisceau laser d'au moins une source de lumière laser modulée (1) étant dirigé par balayage au moyen du scanner de lumière sur un moyen de conversion de lumière (8) afin de produire sur celui-ci une image lumineuse (11) qui est projetée sur la chaussée en tant qu'image lumineuse (11') par l'intermédiaire d'un système de représentation (12), et un micromiroir (10) du scanner de lumière étant pivoté dans au moins une direction de coordonnées conformément à des lignes caractéristiques de commande déterminées, dans lequel

l'image lumineuse souhaitée (11) est divisée en un ensemble de pixels avec n lignes et/ou m colonnes,

la courbe caractéristique de commande horizontale et/ou verticale pour le micromiroir (10) est adaptée à au moins une ligne et/ou une colonne sélectionnée en ce qui concerne la puissance optique nécessaire des pixels, la ligne et/ou la colonne sélectionnée étant celle dans laquelle l'intensité lumineuse maximale est nécessaire en somme sur ses n pixels, et

la caractéristique de commande horizontale et/ou verticale adaptée est utilisée pour commander le micromiroir,

**caractérisé en ce que**

l'image lumineuse souhaitée est divisée en un ensemble de pixels de n lignes et m colonnes,

dans une première étape, pour optimiser les caractéristiques de commande en fonction de la répartition lumineuse souhaitée, on détermine pour chaque pixel de l'ensemble de pixels l'intensité d'éclairage nécessaire $E_{ij}$,

dans une deuxième étape (v12), on choisit la colonne (r)/ligne dans laquelle l'éclairement maximal, à savoir l'éclairement total de cette colonne c2/ligne, est nécessaire en somme pour ses n pixels,

dans une troisième étape (v22), on calcule, à partir de cette intensité d'éclairage totale, quelle unité de temps est disponible en moyenne par intensité d'éclairage $t_{lx}$ dans cette colonne (c2)/ligne, à savoir $t_{slx} = Ts \, / \, E_{c2}\,ges.$, TS étant la demi-période de la période de colonne/ligne et Ec2 ges. la somme de toutes les valeurs d'intensité d'éclairage prédéfinies par pixel nécessaire dans cette demi-période de la période de colonne,

dans une quatrième étape (v32), on utilise les éclairements ($E_{c2n}$) de la colonne (c2)/ligne qui sont présents dans une rangée pour créer une nouvelle rangée, l'éclairement $E'_{c2n}$ de chaque membre de la nouvelle rangée étant égal à

$$E'_{c2n} = \sum_{j=1}^{n} E_{c2j}$$

dans une cinquième étape (v42), on multiplie chaque élément de la nouvelle série par l'unité de temps par éclairement $t_{lx}$ pour obtenir une nouvelle série temporelle qui est définie comme nouvelle caractéristique de commande optimisée via l'angle de déviation $\alpha_V' = \alpha_{Vmax}/n$ disponible pour chaque pixel, et on multiplie chaque élément de la nouvelle série temporelle par l'angle de déviation $\alpha' = \alpha_{max}/n$ disponible pour chaque pixel, ce qui permet d'obtenir une déviation et donc une caractéristique de commande optimisée pour chaque pixel de la colonne/ligne, et

dans une sixième étape (v52), on utilise cette caractéristique de commande pour piloter le micromiroir pour chaque colonne/ligne.

2. Procédé selon la revendication 1, **caractérisé en ce que** l'axe restant est commandé avec une caractéristique de commande fixe, non optimisée.

3. Procédé selon la revendication 1, **caractérisé en ce que**

dans une septième étape (v62), l'utilisation de la puissance laser par pixel est évaluée et la ligne/colonne avec la meilleure utilisation $\eta_{max}$ est déterminée,

dans une huitième étape (v72), la colonne avec l'utilisation optimale de la puissance laser installée est sélectionnée et utilisée pour l'optimisation de la caractéristique de commande de l'axe restant et, par la suite, dans des étapes analogues aux première (v11), deuxième (v22), troisième (v32) et quatrième (v42) étapes, en partant de l'utilisation de la puissance laser installée par pixel, toutes les utilisations de la puissance laser installée dans le pixel respectif étant additionnées dans la ligne (r2) dans laquelle l'utilisation la plus élevée de la puissance laser installée, déterminée précédemment, a pu être réalisée,

dans une neuvième étape (v82), on calcule ensuite, en partant de l'utilisation $\eta_{r2\ ges}$. quelle unité de temps est disponible par utilisation $t_{Z\eta}$

dans cette ligne (r2).

$$t_{Z\eta} = T_Z / \eta_{r2\ ges.}$$

où Tz est la demi-période de la période de la ligne et $\eta_{r2\ ges.}$ la somme, nécessaire pendant cette demi-période de la période de la ligne, de toutes les utilisations calculées ou mesurées de la puissance laser installée par pixel,

dans une dixième étape (v92), les valeurs d'utilisation respectives de la ligne (r2) sont utilisées pour créer une nouvelle série, l'intensité d'éclairage $\eta'_{r2m}$ de chaque membre de la nouvelle rangée étant égale à $\eta'_{r2m} = \sum_{j=1}^{m} \eta_{r2j}$,

dans une onzième étape (v102), les membres de la nouvelle série sont multipliés par l'unité de temps par utilisation $t_{Z\eta}$ et sont déterminés par l'intermédiaire de l'angle de déviation $\alpha_H' = \alpha_{Hmax}/m$, disponible pour chaque pixel, comme nouvelle caractéristique de commande horizontale/verticale optimisée.

4. Procédé selon les revendications 1 et 3, **caractérisé en ce que** dans une douzième étape (v112), la caractéristique de commande optimisée est appliquée pour l'axe vertical/horizontal et l'axe horizontal/vertical et, de manière analogue à la septième étape (v62), l'utilisation de la puissance laser installée par pixel est déterminée.

5. Procédé selon les revendications 1, 3 et 4, **caractérisé en ce que** l'optimisation des caractéristiques de commande est effectuée par étapes (étapes v11 à v111) dans l'ordre inverse par rapport aux lignes et aux colonnes ou aux axes, afin d'obtenir en outre deux caractéristiques de commande optimisées.

6. Procédé selon l'une des revendications 1 à 5, **caractérisé en ce qu'**une sélection est effectuée parmi l'ensemble des caractéristiques de commande optimisées obtenues en fonction de l'image lumineuse souhaitée, la combinaison la plus favorable étant utilisée pour commander le scanner optique.

7. Projecteur pour véhicules, comprenant au moins une source de lumière laser modulée (1) dont le faisceau laser peut être dirigé par balayage sur un moyen de conversion de lumière (8) au moyen d'un scanner de lumière (7), afin de produire sur celui-ci une image lumineuse (11) qui est projetée sur la chaussée en tant qu'image lumineuse (11') par l'intermédiaire d'un système de représentation (12), et un micromiroir (10) du scanner de lumière peut être pivoté dans au moins une direction de coordonnées conformément à des caractéristiques de commande déterminées, ainsi qu'avec une commande de laser (3) et une unité de calcul (4) associée à celle-ci, **caractérisé en ce que** l'unité de calcul (4) est aménagée pour l'exécution du procédé selon une ou plusieurs des revendications précédentes.

Fig. 1

Fig. 2

Fig. 3

*Fig. 4*

*Fig. 6*

*Fig. 7*

$$\boxed{n, m \; festlegen}$$

Variante 1
$\boxed{\begin{array}{c} W/Pixel \; max. \\ ermitteln \end{array}}$
Variante 2

horizontale
SK anpassen

vertikale
SK anpassen

$v11$ —— $\boxed{E_{r1\,ges.} \quad in \; r1}$

$\boxed{E_{c2\,ges.} \quad in \; c2}$ —— $v12$

$v21$ —— $\boxed{t_{zlx} = T_Z / E_{r1\,ges.}}$

$\boxed{t_{slx} = T_S / E_{c2\,ges.}}$ —— $v22$

$v31$ —— $\boxed{E'_{r1m} = \sum_{j=1}^{m} E_{r1j}}$

$\boxed{E'_{c2n} = \sum_{j=1}^{n} E_{c2j}}$ —— $v32$

$v41$ —— $\boxed{E'_{r1m} * t_{lx} \Big/ \alpha_H{}' = \alpha_{Hmax}/m}$

$\boxed{E'_{c2n} * t_{lx} \Big/ \alpha_V{}' = \alpha_{Vmax}/n}$ —— $v42$

$v51$ —— $\boxed{\begin{array}{c} horiz. \; SK \\ anwenden \end{array}}$

$\boxed{\begin{array}{c} vert. \; SK \\ anwenden \end{array}}$ —— $v52$

*Fig. 5a*

Fig. 5b

*Fig. 8*

*Fig. 9*

*Fig. 10*

| | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|
| 15 | 17 | 19 | 23 | 27 | 31 | 37 | 42 | 49 | 56 | 63 | 70 | 77 | 82 | 86 | 88 | 90 | 92 | 93 | 94 | 95 | 95 | 95 | 96 | 95 | 94 | 91 | 88 | 88 | 85 |
| 15 | 17 | 20 | 23 | 27 | 31 | 36 | 42 | 47 | 53 | 59 | 66 | 72 | 77 | 82 | 86 | 88 | 91 | 92 | 93 | 94 | 95 | 95 | 96 | 96 | 94 | 91 | 88 | 88 | 85 |
| 15 | 17 | 20 | 23 | 27 | 31 | 36 | 41 | 46 | 51 | 56 | 61 | 66 | 71 | 76 | 80 | 84 | 87 | 90 | 92 | 93 | 94 | 95 | 96 | 96 | 94 | 91 | 88 | 88 | 85 |
| 15 | 17 | 20 | 23 | 27 | 31 | 36 | 41 | 45 | 49 | 53 | 58 | 62 | 66 | 70 | 74 | 78 | 82 | 86 | 89 | 92 | 93 | 95 | 96 | 96 | 95 | 91 | 89 | 89 | 86 |
| 16 | 18 | 20 | 23 | 27 | 32 | 36 | 41 | 45 | 49 | 52 | 56 | 60 | 63 | 66 | 69 | 72 | 76 | 81 | 85 | 89 | 92 | 94 | 95 | 96 | 95 | 92 | 89 | 89 | 86 |
| 16 | 18 | 20 | 24 | 27 | 32 | 37 | 41 | 45 | 48 | 52 | 56 | 59 | 61 | 64 | 66 | 69 | 72 | 77 | 82 | 87 | 91 | 93 | 95 | 96 | 95 | 92 | 89 | 89 | 86 |
| 16 | 18 | 21 | 24 | 28 | 32 | 37 | 41 | 45 | 48 | 52 | 55 | 58 | 60 | 62 | 64 | 67 | 70 | 75 | 80 | 85 | 89 | 92 | 95 | 96 | 95 | 93 | 90 | 90 | 87 |
| 17 | 19 | 21 | 25 | 29 | 33 | 38 | 42 | 45 | 48 | 51 | 54 | 57 | 60 | 62 | 64 | 66 | 69 | 72 | 77 | 82 | 87 | 91 | 94 | 96 | 96 | 93 | 91 | 91 | 88 |
| 17 | 19 | 22 | 25 | 29 | 34 | 39 | 42 | 46 | 49 | 51 | 54 | 56 | 59 | 61 | 63 | 65 | 67 | 70 | 74 | 79 | 84 | 88 | 92 | 95 | 96 | 94 | 92 | 93 | 90 |
| 18 | 20 | 23 | 26 | 31 | 36 | 40 | 44 | 48 | 50 | 52 | 54 | 56 | 59 | 61 | 63 | 65 | 68 | 70 | 73 | 77 | 81 | 86 | 90 | 94 | 96 | 95 | 94 | 95 | 92 |
| 19 | 22 | 25 | 28 | 33 | 38 | 43 | 47 | 51 | 53 | 55 | 56 | 58 | 60 | 62 | 64 | 67 | 69 | 72 | 74 | 77 | 80 | 84 | 89 | 93 | 96 | 96 | 96 | 96 | 95 |
| 21 | 23 | 27 | 31 | 36 | 41 | 47 | 51 | 55 | 57 | 58 | 60 | 61 | 62 | 64 | 66 | 68 | 71 | 74 | 77 | 79 | 82 | 85 | 88 | 92 | 96 | 96 | 96 | 95 | 96 |
| 22 | 25 | 29 | 34 | 39 | 45 | 51 | 56 | 60 | 62 | 64 | 65 | 65 | 66 | 67 | 69 | 71 | 74 | 77 | 80 | 83 | 86 | 88 | 91 | 94 | 96 | 96 | 95 | 95 | 95 |
| 24 | 27 | 31 | 36 | 42 | 49 | 55 | 61 | 65 | 67 | 69 | 70 | 71 | 71 | 72 | 73 | 74 | 77 | 80 | 83 | 86 | 89 | 91 | 94 | 96 | 96 | 95 | 93 | 94 | 92 |
| 26 | 29 | 33 | 39 | 45 | 52 | 59 | 65 | 69 | 72 | 74 | 75 | 76 | 76 | 77 | 78 | 79 | 80 | 82 | 85 | 87 | 90 | 92 | 95 | 96 | 96 | 94 | 91 | 92 | 89 |
| 28 | 32 | 36 | 42 | 49 | 56 | 64 | 70 | 75 | 78 | 80 | 82 | 82 | 83 | 84 | 84 | 84 | 85 | 86 | 88 | 90 | 91 | 93 | 95 | 96 | 96 | 93 | 91 | 91 | 88 |
| 32 | 36 | 41 | 47 | 54 | 62 | 70 | 76 | 81 | 84 | 86 | 88 | 89 | 90 | 90 | 90 | 91 | 91 | 92 | 92 | 93 | 94 | 95 | 96 | 96 | 95 | 92 | 90 | 90 | 87 |
| 35 | 40 | 45 | 51 | 58 | 66 | 73 | 79 | 84 | 87 | 89 | 91 | 92 | 93 | 93 | 93 | 94 | 94 | 94 | 94 | 95 | 95 | 96 | 96 | 96 | 94 | 91 | 88 | 88 | 86 |
| 38 | 43 | 48 | 54 | 61 | 68 | 75 | 81 | 85 | 88 | 90 | 92 | 93 | 94 | 94 | 95 | 94 | 95 | 95 | 95 | 95 | 96 | 96 | 96 | 96 | 94 | 91 | 88 | 88 | 85 |
| 42 | 46 | 52 | 58 | 64 | 71 | 77 | 82 | 86 | 89 | 91 | 92 | 94 | 95 | 95 | 95 | 95 | 95 | 95 | 95 | 96 | 96 | 96 | 96 | 95 | 94 | 90 | 87 | 87 | 85 |
| 45 | 50 | 55 | 61 | 68 | 74 | 80 | 84 | 87 | 90 | 91 | 93 | 94 | 95 | 95 | 96 | 96 | 96 | 96 | 96 | 96 | 96 | 96 | 96 | 95 | 93 | 90 | 87 | 87 | 85 |
| 48 | 53 | 59 | 65 | 71 | 77 | 82 | 86 | 89 | 91 | 92 | 93 | 94 | 95 | 95 | 95 | 96 | 96 | 96 | 96 | 96 | 96 | 96 | 96 | 95 | 93 | 90 | 87 | 87 | 85 |
| 51 | 57 | 62 | 68 | 74 | 79 | 84 | 88 | 90 | 92 | 93 | 94 | 94 | 95 | 95 | 95 | 95 | 95 | 96 | 96 | 96 | 96 | 96 | 96 | 95 | 94 | 90 | 87 | 88 | 85 |
| 54 | 60 | 66 | 72 | 78 | 82 | 86 | 89 | 91 | 93 | 94 | 94 | 95 | 95 | 95 | 95 | 95 | 95 | 96 | 96 | 96 | 96 | 96 | 96 | 95 | 94 | 90 | 88 | 88 | 86 |
| 58 | 64 | 70 | 76 | 81 | 85 | 89 | 91 | 92 | 93 | 94 | 95 | 95 | 95 | 95 | 95 | 95 | 96 | 96 | 96 | 96 | 96 | 96 | 96 | 95 | 94 | 91 | 88 | 88 | 86 |
| 62 | 68 | 74 | 80 | 85 | 88 | 91 | 92 | 93 | 94 | 95 | 95 | 95 | 96 | 96 | 96 | 96 | 96 | 96 | 96 | 96 | 96 | 96 | 96 | 96 | 94 | 91 | 88 | 89 | 86 |
| 66 | 73 | 79 | 84 | 88 | 91 | 93 | 94 | 94 | 95 | 95 | 95 | 96 | 96 | 96 | 96 | 96 | 96 | 96 | 96 | 96 | 96 | 96 | 96 | 96 | 95 | 91 | 89 | 89 | 87 |
| 73 | 79 | 84 | 88 | 91 | 93 | 94 | 94 | 95 | 95 | 95 | 96 | 96 | 96 | 96 | 96 | 96 | 96 | 96 | 96 | 96 | 96 | 96 | 96 | 96 | 95 | 91 | 89 | 89 | 87 |
| 83 | 87 | 90 | 92 | 93 | 94 | 95 | 95 | 95 | 95 | 95 | 95 | 96 | 96 | 96 | 96 | 96 | 96 | 96 | 96 | 96 | 96 | 96 | 96 | 96 | 95 | 91 | 88 | 89 | 88 |
| 96 | 96 | 96 | 96 | 96 | 96 | 96 | 96 | 96 | 96 | 96 | 96 | 96 | 96 | 96 | 96 | 96 | 96 | 96 | 96 | 96 | 96 | 96 | 96 | 96 | 94 | 91 | 89 | 90 | 90 |

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012205437 A1
- US 20090046474 A1
- US 20140029282 A
- EP 2690352 A1
- WO 2014121314 A1